# EUROPÄISCHE PATENTSCHRIFT

(11) **EP 2 656 334 B1**
(45) Veröffentlichungstag und Bekanntmachung des Hinweises auf die Patenterteilung: **28.01.2015**
(21) Anmeldenummer: 11807680.1
(22) Anmeldetag: 20.12.2011
(51) Int. Cl.: G08C 25/00

(54) **SPANNUNGSREGELUNG FÜR AUSGANGSTRANSISTOR EINER SIGNALAUSGANGSSTUFE**
VOLTAGE CONTROL FOR AN OUTPUT TRANSISTOR OF A SIGNAL OUTPUT STAGE
RÉGULATION DE TENSION POUR TRANSISTOR DE SORTIE D'UN ÉTAGE DE SORTIE DE SIGNAL

(30) Priorität: 21.12.2010 DE 102010061433
(43) Veröffentlichungstag der Anmeldung: 30.10.2013
(73) Patentinhaber: Phoenix Contact GmbH & Co. KG, 32825 Blomberg (DE)
(72) Erfinder: MEIER, Heinz-W., 32689 Kalletal (DE); BLANKE, Jörg, 32657 Lemgo (DE)
(74) Vertreter: Michalski Hüttermann & Partner Patentanwälte mbB
(86) Internationale Anmeldenummer: PCT/EP2011/073447
(87) Internationale Veröffentlichungsnummer: WO 2012/084980

(56) Entgegenhaltungen:
- DE-A1- 3 207 785
- DE-A1- 10 217 447
- DE-A1- 10 322 262
- DE-A1-102007 006 503

## Beschreibung

Aus dem Stand der Technik sind zahlreiche Signal-Trenner und Signal-Speise-Trenner bekannt.

Diese Signal-(Speise-)Trenner erhalten eingangsseitig ein Eingangssignal, das galvanisch getrennt zum Ausgang zu übertragen ist. Im Allgemeinen wird dabei eine Hilfsenergieschaltung benötigt, die die Energie für den Eingang und den Ausgang zur Verfügung stellt.

Um für den Fall von kleinen Bürden die Verlustleistung klein zu halten war bei diesen Signal-(Speise-)Trenner vorgesehen, die Versorgungsspannung der Ausgangsstufe an den aktuellen Leistungsbedarf anzupassen. Eine derartige Schaltung zeigt beispielsweise die DE 103 22 262. Dort wird die Hilfsenergie ausschließlich in den Signalausgang eingespeist und der Signaleingang wird vom Signalausgang her gespeist.

Andere Konzepte, wie das aus der DE 10 2007 006 503, sehen vor, einen Linearregler und einen nachgeschalteten Schaltregler einzusetzen. Hierbei wird der Ausgangsstrom des Gleichstromübertragers über einen Widerstand in ein Spannungssignal gewandelt, welches dem Spannungs-Strom-Wandler des Linearreglers zugeführt wird. Das Regelsignal wird mittels Komperatorschaltung aus der Kollektor-Emitter-Schaltung gewonnen.

Beide Konzepte weisen ihre Nachteile auf.

So ist die Lösung der DE 103 22 262 dadurch gekennzeichnet, dass die Regeleinrichtung Bestandteil der Hilfsenergieeinspeisungsschaltung ist. Weiterhin regelt die Regeleinrichtung die Versorgungsspannung der Ausgangsschaltung selbst, um eine bestimmte Ausgangsspannung zu erzielen.

Zum einen ist ein derartiger Aufbau kompliziert und erfordert Messwiderstände, zum anderen muss die Verlustleistung der Ausgangsstufe selbst geregelt werden. Darüber hinaus ist ein Aufbau mit Messwiderständen fehlerträchtig.

Weiterhin ist die Lösung aus der DE 10 2007 006 503 dadurch gekennzeichnet, dass sie einen Widerstand erfordert um eine Spannungsabfall bereitzustellen, der von einem Strom-Spannungswandler umgesetzt wird.

Zum einen ist ein derartiger Aufbau kompliziert und erfordert Messwiderstände, zum anderen muss die Verlustleistung der Ausgangsstufe selbst geregelt werden. Darüber hinaus ist ein Aufbau mit Messwiderständen fehlerträchtig.

Es ist daher Aufgabe der Erfindung einen anderen Lösungsansatz zur Verfügung zu stellen, der die Nachteile aus dem Stand der Technik auf erfinderische Weise löst und sowohl für einen Signal-Trenner als auch für einen Signal-Speise-Trenner eingesetzt werden kann.

Die Aufgabe wird gelöst durch einen Signal-(Speise-)Trenner für Dead-Zero- oder Live-Zero-Messsignale. Dieser Signal-(Speise-)Trenner weist einen primärseiteigen (Speise-) Eingang, einen sekundärseitigen Ausgang, einen Gleichstromübertrager zur Übertragung von primärseitigem Mess-Eingangsstrom, eine einen Transistor enthaltende Ausgangsstufe zur Bereitstellung eines sekundärseitigen Mess-Ausgangsstromes, eine Hilfsenergieeinspeisung zur Versorgung der Primärseite und zur Versorgung der Sekundärseite und eine Regelungseinrichtung zur Bereitstellung einer geregelten Ausgangsspannung auf.

Die Ausgangsspannung der Regeleinrichtung wird mit Hilfe einer Mess-Einrichtung so auf die Ausgangsspannung geregelt, dass die Verlustleistung des Transistors der Ausgangsstufe im Wesentlichen unabhängig von einer im Betriebszustand angeschlossenen Bürde ist, wobei die Mess-Einrichtung ausgeführt ist, das Kollektorpotential des Transistors zu bestimmen.

In einer Weiterbildung der Erfindung wird die Versorgung der Ausgangsstufe durch die Hilfsenergieeinspeisung bereitgestellt und weist eine im Wesentlichen konstante Spannung auf.

In einer weiteren Ausführungsform der Erfindung weist die Mess-Einrichtung einen Transistor auf, womit das Potential der Ausgangsstufe bestimmt wird und dessen Kollektorausgangssignal einem Feedback-Eingang der Regelungseinrichtung zur Regelung zur Verfügung gestellt wird.

Gemäß einer weiteren Ausführungsform der Erfindung weist die Mess-Einrichtung einen Transistor auf, wobei der Transistor so angeordnet ist, dass die Ansteuerung des Transistors den Mess-Ausgangsstrom nicht beeinflusst.

Gemäß noch einer weiteren Ausführungsform der Erfindung weist die Hilfsenergieeinspeisung einen Gleichspannungsübertrager auf.

In einer weiteren Ausführungsform der Erfindung weist die Hilfsenergieeinspeisung einen Gleichspannungsübertrager mit zwei Gleichrichtern auf, wobei ein Gleichrichter die Versorgung der Primärseite zur Verfügung stellt, und der anderen Gleichrichter die Versorgung der zu regelnden Hilfsspannung zur Verfügung stellt.

In noch einer weiteren Ausführungsform der Erfindung weist die Regelungseinrichtung einen Step-Down-Wandler auf.

Gemäß einer weiteren Ausführungsform der Erfindung weist die Ausgangsstufe einen Strom-Strom-Wandler auf.

Nachfolgend wird die Erfindung eingehender unter Zuhilfenahme der Figuren erläutert. In diesen zeigt:
- Fig. 1: zeigt einen schematischen Schaltplan einer ersten Ausführungsform eines erfindungsgemäßen Signal-Speise-Trenners,
- Fig. 2: zeigt einen schematischen Schaltplan einer zweiten Ausführungsform eines erfindungsgemäßen Signal-Speise-Trenners, und
- Fig. 3: zeigt schematischen Schaltplan einer dritten Ausführungsform eines erfindungsgemäßen Signal-Speise-Trenners.

In der nachfolgenden Beschreibung wird die Erfindung anhand der Figuren näher erläutert werden, dabei bezeichnen gleiche Referenzzeichen in der Regel gleichartige Mittel, so dass die nachfolgende Beschreibung - soweit nicht anders angegeben - sich immer auf alle Figuren bezieht.

Ein erfindungsgemäßer Signal-(Speise-)Trenner für Dead-Zero-oder Live-Zero-Messsignale, weist zunächst einen primärseitigen (Speise-) Eingang IN und einen sekundärseitigen Ausgang OUT auf.

Live-Zero Signale sind Signale, bei denen ein gewisser Bereich als Hinweis auf eine fehlerhafte Funktion interpretiert wird. Typischerweise weisen Live-Zero-Signale einen Bereich von 4 ... 20 mA auf, so dass bei einem Unterschreiten des Stromes von 4 mA oder einem Überschreiten des Stromes von 20 mA davon ausgegangen wird, dass die zu messende Einrichtung fehlerhaft ist. In diesem Fall stellen einige Geräte die Möglichkeit einer Alarmierung zur Verfügung. Die Alarmierung kann sowohl lokal, z.B. optisch und/oder akustisch, und/ oder aber in der Ferne über entsprechende Signalleitungen oder Nachrichten erfolgen.

Dead-Zero-Signale weisen in der Regel keinen solchen Bereich auf, so dass hier aus dem nicht Vorhandensein eines Eingangsstromes nicht geschlossen werden kann, dass die zu messende Einrichtung fehlerhaft ist. Typischerweise weisen Dead-Zero-Signale einen Bereich von 0 ... 20 mA auf.

An den primärseitigen Speise-Eingang IN kann im Betrieb z.B. ein primärseitiger Mess-Eingangsstrom Iin angelegt werden, der durch die Speisspannung Usp getrieben wird.

Eingangsseitig wird der primärseitige Mess-Eingangsstrom Iin dann einem Gleichstromübertrager 100 zur Übertragung zur Verfügung gestellt.

Das übertragene Signal wird dann einer Ausgangsstufe 200 zur Bereitstellung eines sekundärseitigen Mess-Ausgangsstromes (Iout) zur Verfügung gestellt.

Weiterhin weist der erfindungsgemäße Signal-Speise-Trenner eine Hilfsenergieeinspeisung 400 zur Versorgung der Primärseite und zur Versorgung der Sekundärseite auf. Diese Hilfsenergieeinspeisung Uh versorgt die Primärseite mittels Usp mit Energie während die Sekundärseite mittels U mit Energie versorgt wird.

Dabei können Usp und U unterschiedliche Spannungen sein. Usp ist bevorzugt so gewählt, dass sie einen Zwei-Leiter-Transmitter versorgen kann, z.B. 16 V oder mehr.

In allen Ausführungsformen der Erfindung wird die Ausgangsspannung (UR) von einer Regelungseinrichtung 300 mit Hilfe einer Mess-Einrichtung 500 so geregelt, dass die Verlustleistung des Transistors T1 der Ausgangsstufe 200 im Wesentlichen unabhängig von einer im Betriebszustand angeschlossenen Bürde Rb ist.

Die Versorgung der Ausgangsstufe 200 wird durch die Hilfsenergieeinspeisung 400 bereitgestellt und weist im Wesentlichen eine konstante Spannung U auf.

In einer vorteilhaften Ausführung weist der Gleichstromübertrager 100 einen Zerhacker 110 auf, der das empfangene Messeingangssignal zerhackt. Das zerhackte Signal ähnelt einem Wechselstromsignal und wird dann einem Übertrager 130 zur Verfügung gestellt. Der Übertrager 130 stellt ein übertragenes zerhacktes Signal einem Gleichrichter 120 zur Verfügung, der aus dem zerhackten übertragenen Signal wiederum ein Gleichstromsignal erzeugt. Der Übertrager 130 kann dabei sowohl ein 1:1 Übertrager sein als auch andere Übertragungsverhältnisse zur Verfügung stellen. Weiterhin kann der Gleichstromübertrager 100 auch eine galvanische Trennung zur Verfügung stellen.

Die Ausgangsstufe 200 ist als Strom-Strom-Wandler aufgebaut. Hierzu kann der Strom-Strom-Wandler einen entsprechend beschalteten Operationsverstärker OP1 aufweisen.

In einer vorteilhaften Ausführung weist die Hilfsenergieeinspeisung 400 einen Gleichspannungsübertrager auf. Dieser kann ähnlich wie Gleichstromübertrager 100 aufgebaut sein Dabei weist die Hilfsenergieeinspeisung 400 einen Zerhacker 410 auf, der die empfangene Hilfsspannung Uh zerhackt. Das zerhackte Signal ähnelt einem Wechselspannungssignal und wird dann einem Übertrager 430 zur Verfügung gestellt. Der Übertrager 430 stellt zwei übertragene zerhackte Signale zur Verfügung.

Ein erstes zerhacktes übertragenes Signal wird einem ersten Gleichrichter 420 zur Verfügung gestellt, der aus dem zerhackten übertragenen Signal wiederum ein Gleichspannungssignal erzeugt. Das Gleichspannungssignal wird unter anderem als Spannung U der Regelungseinrichtung 300 bzw. dem Operationsverstärker OP1 innerhalb der Ausgangsstufe 200 zur Verfügung gestellt.

Ein zweites zerhacktes übertragenes Signal wird einem zweiten Gleichrichter 421 zur Verfügung gestellt, der aus dem zerhackten übertragenen Signal wiederum ein Gleichspannungssignal erzeugt. Das Gleichspannungssignal wird unter anderem als Spannung Usp als Speisesignal zur Verfügung gestellt.

Der Übertrager 430 kann dabei sowohl ein 1:1 Übertrager für die jeweilige Spannung primärseitig zu sekundärseitig sein als auch andere Übertragungsverhältnisse zur Verfügung stellen. Weiterhin kann der Gleichspannungsübertrager innerhalb der Hilfsenergieeinspeisung 400 auch eine galvanische Trennung zur Verfügung stellen.

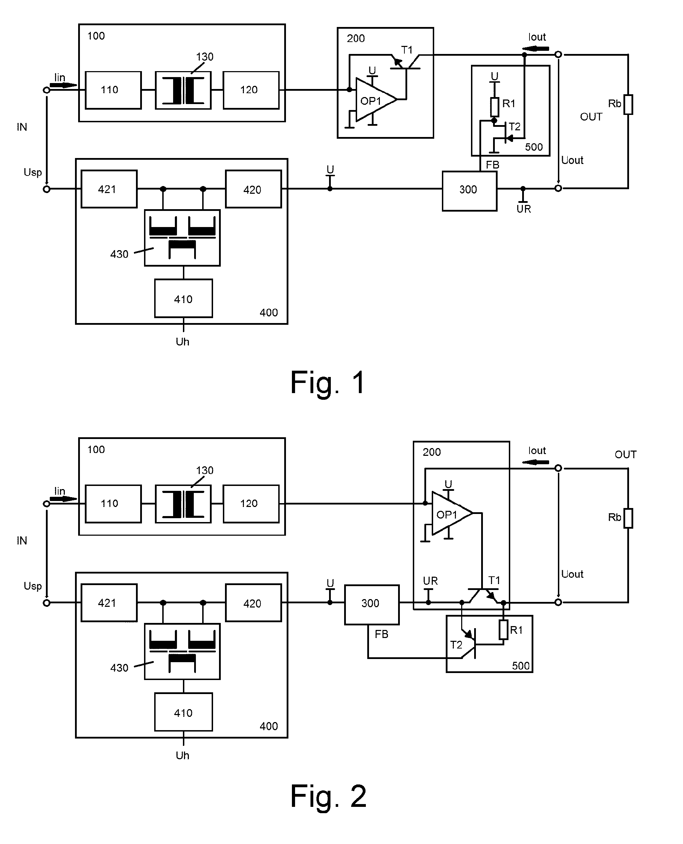

In der Ausführungsform gemäß Figur 1 wird die zum Treiben der Bürde Rb benötigte Spannung von einer Regelungseinrichtung 300 erzeugt. Diese Regelungseinrichtung 300 kann beispielsweise ein Schaltnetzteil sein. Dabei wird die Ausgangsspannung der Regelungseinrichtung 300 so geregelt, dass das Kollektorpotential des Ausgangstransistors T1, welcher sich in der Ausgangsstufe 200 befindet, unabhängig vom Ausgangsstrom Iout und der Ausgansbürde Rb konstant bleibt. Hierbei wird das Kollektorpotential von T1 von der Gatespannung des Transistors T2 der Messeinrichtung 500 bestimmt. Die Regelspannung, welche am Kollektor von T2 entsteht, wird dem Feedback-Eingang der Regeleinrichtung 300 zur Verfügung gestellt.

Vorteilhafterweise ist die Ansteuerleistung von T2 zu begrenzen, um einer Verfälschung des Messsignals zu minimieren, denn die Ansteuerleistung wird dem Messsignal entnommen.

In der Ausführungsform gemäß Figur 2 befindet sich der Ausgangstransistor T1 ausgangsseitig der Regelungseinrichtung 300, die wiederum als Schaltnetzteil ausgeführt sein kann. Hier stellt Transistor T2 die Regelspannung so ein, dass das Kollektor-Emitter-Potential des Ausgangstransistors T1, unabhängig vom Ausgangsstrom Iout und der Ausgansbürde Rb konstant bleibt. Damit entspricht die Regelspannung ungefähr dem Basis-Emitter-Potential von T2. Über den Widerstand R1 wird der Arbeitspunkt des Transistors T2 eingestellt. Durch die Anordnung des Ausganstransistors T1 ausgangsseitig der Regelungseinrichtung 300 wird gewährleistet, dass die Ansteuerleistung für den Transistor T2 das Messsignal nicht beeinflusst.

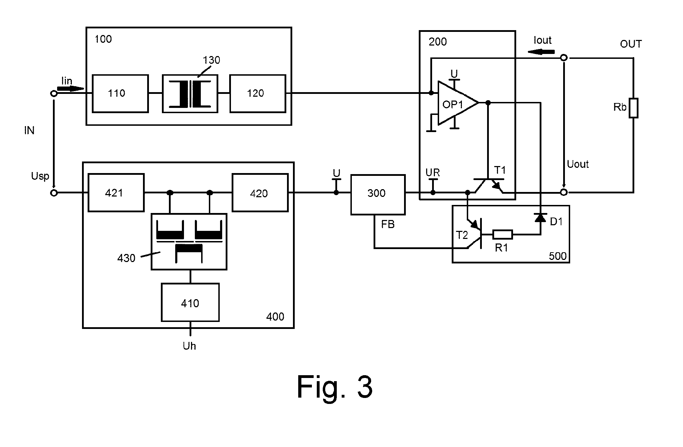

In der Ausführungsform gemäß Figur 3 wird die Ausgangsspannung des Schaltnetzteiles so geregelt, dass die Ausgansspannung in der Regel größer ist als die Ausgangsspannung des Operationsverstärkers OP1 in der Ausgangsstufe 200. Hierbei ergibt sich der Wert um welchen die Ausgangsspannung größer ist im Allgemeinen aus der Reihenschaltung der Emitter-Basis-Strecke des Transistors T2 und der Diode D1.

Da hier die Regelspannungserzeugung mittels der Messeinrichtung 500 keine direkte Verbindung mit der Bürde aufweist und somit auch keine Restströme durch die Bürde Rb fließen lässt kann die Ausgangsstufe 200 den Signalstrom bis auf 0 mA stellen.

Zusammenfassend kann festgehalten werden, dass in den Ausführungsformen gemäß Figur 2 und Figur 3 die Mess-Einrichtung 500 einen Transistor T2 aufweisen kann, womit das Potential UR des Transistor T1 bestimmt wird. Das Kollektorausgangssignal des Transistors T2 wird einem Feedback-Eingang FB der Regelungseinrichtung 300 zur Regelung zur Verfügung gestellt wird.

Weiterhin zusammenfassend kann festgehalten werden, dass in den Ausführungsformen gemäß Figur 2 und Figur 3 die Mess-Einrichtung 500 einen Transistor T2 aufweist, wobei der Transistor T2 so angeordnet ist, dass die Ansteuerung des Transistors T2 den Mess-Ausgangsstrom Iout nicht beeinflusst.

### Bezugszeichenliste

- Primärseitiger Eingang: IN
- Sekundärseitiger Ausgang: OUT
- Gleichstromübertrager: 100
- Zerhacker: 110
- Gleichrichter: 120
- Übertrager: 130
- Ausgangsstufe: 200
- Regelungseinrichtung: 300
- Hilfsenergieeinspeisung: 400
- Zerhacker: 410
- Gleichrichter: 420 , 421
- Messeinrichtung: 500
- Primärseitiger Mess-Eingangsstrom: Iin
- Sekundärseitiger Mess-Ausgangsstrom: Iout
- Widerstand: R1
- Bürde: Rb
- Spannung: U
- Transistor: T1, T2
- Feedback-Eingang: FB
- Operationsverstärker: OP1
- Diode: D1
- Hilfsspannung: Uh
- Geregelte Ausgangsspannung: UR

## Patentansprüche

1. Signal-(Speise-)Trenner für Dead-Zero oder Live-Zero-Messsignale, aufweisend
einen primärseitigen (Speise-) Eingang (IN),
einen sekundärseitigen Ausgang (OUT).
einen Gleichstromübertrager (100) zur Übertragung von primärseitigem Mess-Eingangsstrom (Iin),
eine einen Transistor (T1) enthaltende Ausgangsstufe (200) zur Bereitstellung eines sekundärseitigen Mess-Ausgangsstromes (Iout),
eine Hilfsenergieeinspeisung (400) zur Versorgung der Primärseite und zur Versorgung der Sekundärseite,
eine Regelungseinrichtung (300) zur Bereitstellung einer geregelten Ausgangsspannung (UR),
**dadurch gekennzeichnet, dass**
die Hilfsspannung der Hilfsenergieeinspeisung (400) sekundärseitig von der Regelungseinrichtung (300) mit Hilfe einer Mess-Einrlchtung (500) so auf die Ausgangsspannung (UR) geregelt wird, dass die Verlustleistung des Transistors (T1) der Ausgangsstufe (200) im wesentlichen unabhängig von einer im Betriebszustand angeschlossenen Bürde (Rb) ist, wobei
die Mess-Einrichtung (500) ausgeführt ist, das Kollektorpotential des Transistors (T1) zu bestimmen.

2. Signal-(Speise-)Trenner nach dem vorhergehenden Anspruch, **dadurch gekennzeichnet, dass** die Versorgung der Ausgangsstufe (200) durch die Hilfsenergieeinspeisung (400) bereitgestellt wird und im Wesentlichen eine konstante Spannung (U) aufweist.

3. Signal-(Speise-)Trenner nach einem der vorhergehenden Ansprüche, dadurch gekennzeichet, dass die Mess-Einrichtung (500) einen Transistor (T2) aufweist, womit das Potential der Ausgangsstufe (200) bestimmt wird und dessen Ausgangssignal einem Feedback-Eingang (FB) der Regelungseinrichtung (300) zur Regelung zur Verfügung gestellt wird.

4. Signal-(Speise-)Trenner nach einem der vorhergehenden Ansprüche, **dadurch gekennzeichnet, dass** die Mess-Einrichtung (500) einen Transistor (T2) aufweist, wobei der Transistor (T2) so angeordnet ist, dass die Ansteuerung des Transistors (T2) den Mess-Ausgangsstrom (Iout) nicht beeinflusst.

5. Signal-(Speise-)Trenner nach einem der vorhergehenden Ansprüche, dadurch gekennzeichet, dass die Hilfsenergieeinspeisung (400) einen Gleichspannungsübertrager aufweist.

6. Signal-(Speise-)Trenner nach einem der vorhergehenden Ansprüche, **dadurch gekennzeichnet, dass** die Hilfsenergieeinspeisung (400) einen Gleichspannungsübertrager mit zwei Gleichrichtern (420,421) aufweist, wobei ein Gleichrichter (421) die Versorgung der Primärseite zur Verfügung stellt, und der andere Gleichrichter (420) die Versorgung der zu regelnden Hilfsspannung zur Verfügung stellt.

7. Signal-(Speise-)Trenner nach einem der vorhergehenden Ansprüche, **dadurch gekennzeichnet, dass** die Regelungseinrichtung (300) einen Step-Down-Wandler aufweist.

8. Signal-(Speise-)Trenner nach einem der vorhergehenden Ansprüche, dadurch gekennzeichet, dass die Ausgangsstufe (200) einen Strom-Strom-Wandler (OP1) aufweist.

## Claims

1. A signal (feed) separator for dead-zero or live-zero measuring signals, comprising
a primary-side (feed) input (IN),
a secondary-side output (OUT),
a DC transformer (100) for transferring primary-side measurement input current (Iin),
an output stage (200), comprising a transistor (T1), for providing a secondary-side measurement output current (Iout),
an auxiliary energy feed (400) for supplying the primary side and for supplying the secondary side,
a control device (300) for providing a control output voltage (UR),
**characterised in that**
the auxiliary voltage of the auxiliary energy feed (400) is controlled on the secondary side by the control device (300) with the aid of a measurement device (500) onto the output voltage (UR), such that the power loss of the transistor (T1) of the output stage (200) is substantially independent of a burden (Rb) connected in the operating state, whereby
the measurement device (500) is configured for determining the collector potential of the transistor (T1).

2. The signal (feed) separator according to the preceding claim, **characterised in that** the supply of the output stage (200) is provided by the auxiliary energy feed (400) and has a substantially constant voltage (U).

3. The signal (feed) separator according to one of the preceding claims, **characterised in that** the measurement device (500) comprises a transistor (T2), whereby the potential of the output stage (200) is determined and the output signal of said transistor is provided to a feedback input (FB) of the control device (300) for control purposes.

4. The signal (feed) separator according to one of the preceding claims, **characterised in that** the measurement device (500) comprises a transistor (T2), wherein the transistor (T2) is arranged such that the control of the transistor (T2) does not influence the measurement output current (Iout).

5. The signal (feed) separator according to one of the preceding claims, **characterised in that** the auxiliary energy feed (400) comprises a DC voltage transformer.

6. The signal (feed) separator according to one of the preceding claims, **characterised in that** the auxiliary energy feed (400) comprises a DC voltage transformer with two rectifiers (420, 421), wherein one rectifier (421) provides the supply of the primary side and the other rectifier (420) provides the supply of the auxiliary voltage to be controlled.

7. The signal (feed) separator according to one of the preceding claims, **characterised in that** the control device (300) comprises a step-down converter.

8. The signal (feed) separator according to one of the preceding claims, **characterised in that** the output stage (200) comprises a current-to-current converter (OP1).

## Revendications

1. Séparateur (d'alimentation) de signaux pour des signaux de mesure dead-zéro ou live-zéro, comportant
une entrée (d'alimentation) côté primaire (IN),
une sortie côté secondaire (OUT),
un transmetteur de courant continu (100) pour la transmission d'un courant d'entrée de mesure côté primaire (Iin),
un niveau de sortie (200) contenant un transistor (T1) pour la mise à disposition d'un courant de sortie de mesure côté secondaire (lout),
une alimentation en énergie auxiliaire (400) pour l'alimentation du côté primaire et pour l'alimentation du côté secondaire,
un dispositif d'ajustement (300) pour la mise à disposition d'une tension de sortie ajustée (UR),
**caractérisé en ce que**
la tension auxiliaire de l'alimentation en énergie auxiliaire (400) est ajustée par rapport à la tension de sortie (UR) côté secondaire par le dispositif d'ajustement (300) à l'aide d'un dispositif de mesure (500), de manière à ce que la perte de puissance du transistor (T1) du niveau de sortie (200) soit quasiment indépendante d'une charge (Rb) raccordée pendant le fonctionnement, dans lequel
le dispositif de mesure (500) est conçu pour déterminer le potentiel de collecte du transistor (T1).

2. Séparateur (d'alimentation) de signaux selon la revendication précédente, **caractérisé en ce que** l'alimentation du niveau de sortie (200) est mise à disposition par l'alimentation en énergie auxiliaire (400) et présente une tension (U) quasiment constante.

3. Séparateur (d'alimentation) de signaux selon l'une des revendications précédentes, **caractérisé en ce que** le dispositif de mesure (500) comporte un transistor (T2) permettant de déterminer le potentiel du niveau de sortie (200) et dont le signal de sortie est mis à la disposition d'une entrée de feedback (FB) du dispositif d'ajustement (300) pour l'ajustement.

4. Séparateur (d'alimentation) de signaux selon l'une des revendications précédentes, **caractérisé en ce que** le dispositif de mesure (500) comporte un transistor (T2), le transistor (T2) étant agencé de manière à ce que l'actionnement du transistor (T2) n'influence pas le courant de sortie de mesure (lout).

5. Séparateur (d'alimentation) de signaux selon l'une des revendications précédentes, **caractérisé en ce que** l'alimentation en énergie auxiliaire (400) comporte un transmetteur de tension continue.

6. Séparateur (d'alimentation) de signaux selon l'une des revendications précédentes, **caractérisé en ce que** l'alimentation en énergie auxiliaire (400) comporte un transmetteur de tension continue avec deux redresseurs (420, 421), sachant qu'un redresseur (421) met à disposition l'alimentation du côté primaire et l'autre redresseur (420) met à disposition l'alimentation de la tension auxiliaire à ajuster.

7. Séparateur (d'alimentation) de signaux selon l'une des revendications précédentes, **caractérisé en ce que** le dispositif d'ajustement (300) comporte un convertisseur Step-Down.

8. Séparateur (d'alimentation) de signaux selon l'une des revendications précédentes, **caractérisé en ce que** le niveau de sortie (200) comporte un convertisseur courant-courant (OP1).
